# EUROPEAN PATENT APPLICATION

(11) **EP 4 628 474 A1**
(43) Date of publication of application: **08.10.2025**
(21) Application number: 24744526.5
(22) Date of filing: 09.01.2024
(51) Int. Cl.: C04B 40/00

(54) **CARBONATED CEMENT SLURRY PRODUCTION SYSTEM**

(30) Priority: 19.01.2023 JP 2023006301
(71) Applicant: Taiheiyo Cement Corporation, Bunkyo-ku Tokyo 112-8503 (JP)
(72) Inventor: NIIJIMA, Shun, Tokyo 112-8503 (JP); SENGOKU, Taiyo, Tokyo 112-8503 (JP); TERASAKI, Jun-ichi, Tokyo 112-8503 (JP)
(74) Representative: Isarpatent
(86) International application number: PCT/JP2024/000113
(87) International publication number: WO 2024/154603

(57) **Abstract**

Provide is a carbonated cement slurry production system capable of efficiently fixing carbon dioxide in a cement slurry with a larger amount. A carbonated cement slurry production system 1 for producing a carbonated cement slurry formed by carbonation of a cement slurry containing cement and water by a carbon dioxide-containing gas, the carbonated cement slurry production system comprising: a carbonation apparatus 2 for bringing the cement slurry 15 into contact with the carbon dioxide-containing gas; and carbon dioxide-containing gas supply apparatus 3 for supplying the carbon dioxide-containing gas to the carbonation apparatus 2 at a pressure larger than an atmospheric pressure, wherein the carbonation apparatus 2 includes a carbonation tank 4 for storing the cement slurry 15 and the carbon dioxide-containing gas so that a gas phase formed of the carbon dioxide-containing gas is positioned above a liquid phase of the cement slurry.

## Description

### Technical Field

The present invention relates to a carbonated cement slurry production system.

### Background Art

In recent years, reducing an amount of carbon dioxide emissions has become an important issue in order to prevent global warming.

In relation to this, a technique to fix carbon dioxide recovered from exhaust gas generated in cement manufacturing plants onto concrete or the like is being studied.

As a method for providing concreate in which carbon dioxide is efficiently fixed, Patent Literature 1 discloses a method for producing concrete, which includes a step for forming a first mixture containing cement and water, a step for adding carbon dioxide to the first mixture to form a second mixture, and a step for hardening the second mixture, wherein a weight of the water is adjusted such that an amount of unhydrated cement remaining in the concrete is 0% to 50%.

As a method for producing a cement powder composition using a calcium-containing powder having absorbed carbon dioxide, Patent Literature 2 discloses a method for producing a cement powder composition containing a cement clinker powder, a gypsum powder, and a carbonated calcium-containing powder, which is characterized by including a carbonation step in which a carbon-dioxide-containing gas is supplied into a slurry containing the calcium-containing powder before carbonation and water to obtain a carbonated slurry, and a pulverization step in which cement clinker, gypsum, and the carbonated slurry are supplied into a finishing mill for producing cement and pulverized to obtain the cement powder composition.

### Citation List

### Patent Literature

[Patent Literature 1] JP 2020-37493 A
[Patent Literature 2] JP 2020-152631 A

### Summary of Invention

### Technical Problem

An object of the present invention is to provide a carbonated cement slurry production system capable of efficiently fixing carbon dioxide in a cement slurry with a larger amount.

### Solution to Problem

The inventors of the present invention have made extensive investigations in order to achieve the above-mentioned object, and as a result, have found that the object can be achieved by a carbonated cement slurry production system for producing a carbonated cement slurry formed by carbonation of a cement slurry containing cement and water by a carbon dioxide-containing gas, the carbonated cement slurry production system comprising: a carbonation apparatus for bringing the cement slurry into contact with the carbon dioxide-containing gas; and a carbon dioxide-containing gas supply apparatus for supplying the carbon dioxide-containing gas to the carbonation apparatus at a pressure larger than atmospheric pressure, wherein the carbonation apparatus includes a carbonation tank for storing the cement slurry and the carbon dioxide-containing gas so that a gas phase formed of the carbon dioxide-containing gas is positioned above a liquid phase of the cement slurry.

That is, the present invention provides the following items [1] to [12].
[1] A carbonated cement slurry production system for producing a carbonated cement slurry obtained by carbonating a cement slurry containing cement and water with a carbon dioxide-containing gas, the carbonated cement slurry production system including: a carbonation apparatus for bringing the cement slurry into contact with the carbon dioxide-containing gas; and a carbon dioxide-containing gas supply apparatus for supplying the carbon dioxide-containing gas to the carbonation apparatus at a pressure larger than atmospheric pressure, wherein the carbonation apparatus includes a carbonation tank for storing the cement slurry and the carbon dioxide-containing gas such that a gas phase including the carbon dioxide-containing gas is positioned above a liquid phase including the cement slurry.
[2] The carbonated cement slurry production system according to the above-mentioned item [1], wherein the carbonation apparatus includes an inflow port of the cement slurry and an inflow port of the carbon dioxide-containing gas, and the carbonated cement slurry production system includes a mixing tank for mixing the cement with the water to obtain the cement slurry on an upstream side of the carbonation apparatus.
[3] The carbonated cement slurry production system according to the above-mentioned item [2], wherein the carbonated cement slurry production system includes a slurry circulation path for circulating the carbonated cement slurry between the carbonation apparatus and the mixing tank.
[4] The carbonated cement slurry production system according to the above-mentioned item [1], wherein the carbonation apparatus includes an inflow port of the cement, an inflow port of the water, and an inflow port of the carbon dioxide-containing gas.
[5] The carbonated cement slurry production system according to the above-mentioned item [4], wherein the carbonated cement slurry production system includes a slurry circulation path for returning a part of the carbonated cement slurry discharged from the carbonation apparatus to the carbonation apparatus and circulating it.
[6] The carbonated cement slurry production system according to the above-mentioned item [1], wherein the carbonated cement slurry production system includes a mixing tank for mixing the cement with the water to obtain the cement slurry on an upstream side of the carbonation apparatus, a storage tank for storing the cement slurry on a downstream side of the mixing tank and on the upstream side of a carbonation apparatus, and a slurry circulation path for circulating the carbonated cement slurry between the carbonation apparatus and the storage tank.
[7] The carbonated cement slurry production system of any one of the above-mentioned items [1] to [6], wherein the carbonated cement slurry production system includes a storage tank for storing the carbonated cement slurry obtained by the carbonation apparatus.
[8] The carbonated cement slurry production system according to any one of the above-mentioned items [1] to [7], wherein the carbonated cement slurry production system includes a solid/liquid separation means for recovering a part of the water in the carbonated cement slurry obtained by the carbonation apparatus.
[9] The carbonated cement slurry production system according to the above-mentioned item [8], wherein the carbonated cement slurry production system includes a water return means for using the water recovered by the solid/liquid separation means as a part of the water for preparing the cement slurry.
[10] The carbonated cement slurry production system according to any one of the above-mentioned items [1] to [9], wherein the carbonated cement slurry production system includes a liquid temperature adjustment means for adjusting a liquid temperature of at least one of the cement slurry and the carbonated cement slurry.
[11] The carbonated cement slurry production system according to any one of the above-mentioned items [1] to [10], wherein the carbonated cement slurry production system includes a pH measurement means for measuring a pH of at least one of the cement slurry and the carbonated cement slurry.
[12] A method for producing a carbonated cement slurry obtained by carbonating a cement slurry containing cement and water with a carbon dioxide-containing gas, the method including: a cement slurry preparation step for mixing the cement with the water to obtain the cement slurry; a cement slurry storage step for storing the cement slurry and the carbon dioxide-containing gas in a carbonation tank such that a gas phase including the carbon dioxide-containing gas is positioned above a liquid phase including the cement slurry; and a carbonated cement slurry preparation step for supplying the carbon dioxide-containing gas to the gas at a pressure larger than an atmospheric pressure and bringing the liquid phase into contact with the gas phase to carbonate the cement slurry and to obtain a carbonated cement slurry.

### Advantageous Effects of Invention

According to the carbonated cement slurry production system of the present invention, it becomes possible to efficiently fix carbon dioxide in a cement slurry with a larger amount.

### Brief Description of Drawings

[FIG. 1] FIG. 1 is a schematic view showing one example of a carbonated slurry production system of the present invention, which contains a mixing tank.
[FIG. 2] FIG. 2 is a schematic view showing one example of the carbonated slurry production system of the present invention, which does not contain the mixing tank.
[FIG. 3] FIG. 3 is a schematic view showing one example of the carbonated slurry production system of the present invention, which contains the mixing tank and a storage tank.

### Description of Embodiments

A carbonated cement slurry production system of the present invention is for producing a carbonated cement slurry obtained by carbonating a cement slurry containing cement and water with a carbon dioxide-containing gas. The carbonated cement slurry production system of the present invention includes a carbonation apparatus for bringing the cement slurry into contact with the carbon dioxide-containing gas, and a carbon dioxide-containing gas supply apparatus for supplying the carbon dioxide-containing gas to the carbonation apparatus at a pressure larger than atmospheric pressure. The above carbonation apparatus includes a carbonation tank for storing the cement slurry and the carbon dioxide-containing gas such that a gas phase including the carbon dioxide-containing gas is positioned above a liquid phase including the cement slurry. In the present description, the term "carbonation" refers to the absorption and fixation of carbon dioxide.

Details will be described below.

The carbonation apparatus is provided with the carbonation tank for storing a cement slurry and a carbon dioxide-containing gas (a gas containing carbon dioxide having a gaseous form (hereinafter, it is also referred to as "carbon dioxide gas")) such that a gas phase including the carbon dioxide-containing gas is positioned above a liquid phase including the cement slurry.

In the description, the term "liquid phase" has a concept of including a slurry (specifically, a cement slurry) formed by mixing a liquid and a powder and granular material (specifically, water and cement).

By bringing the cement slurry into contact with the carbon dioxide-containing gas in an environment where a pressure of the gas phase is higher than the atmospheric pressure (for example, a pressure difference of 0.02 MPa or more) in the carbonation tank (bringing into contact at an interface between the liquid phase and the gas phase), it is possible to efficiently absorb and fix the carbon dioxide in the cement slurry with a larger amount.

The carbonation tank is usually a sealed vessel capable of being pressurized. By supplying carbon dioxide gas to the gas phase in the carbonation tank under pressurization (in an environment where an internal pressure of the carbonation tank is higher than the atmospheric pressure), an amount of the carbon dioxide fixed in the carbonated cement slurry is increased, and it becomes possible to obtain the carbonated cement slurry in which a larger amount of carbon dioxide is fixed.

From a view of efficiently absorbing and fixing the carbon dioxide in the cement slurry with a larger amount, a stirring means such as a stirring blade may be arranged in the carbonation tank, and the cement slurry may be brought into contact with the carbon dioxide-containing gas while stirring the cement slurry using the stirring means or circulating the cement slurry using a circulation means.

The cement slurry is a mixture (slurry) containing cement and water.

The cement is not particularly limited, and for example, includes various Portland cements such as ordinary Portland cement, high-early-strength Portland cement, moderated-heat Portland cement, and low-heat Portland cement, mixed cements such as blast furnace cement and fly ash cement, and eco-cement. One of these may be used alone, or two or more may be used in combination.

The water is not particularly limited, and for example, includes, tap water, industrial water, and recovered water such as supernatant water and sludge water generated in concrete manufacturing plants.

A water-cement ratio (a mass ratio of water to cement (water/cement)) of the cement slurry varies depending on a use of the carbonated cement slurry and a target concentration of the carbonated cement slurry, but is preferably 0.2 to 10.0, more preferably 0.4 to 9.5, more preferably over 0.6, not more than 9.0, more preferably 1.0 to 8.5, more preferably 2.0 to 8.0, and particularly preferably 3.0 to 7.5.

When the water-cement ratio is 0.2 or more, a viscosity of the cement slurry becomes low, so that workability is improved and carbon dioxide can be continuously and stably absorbed and fixed in the cement slurry.

When the water-cement ratio is 10.0 or less, a use of the carbonated cement slurry is hardly limited, and when the carbonated cement slurry is mixed as a part of a material such as concrete, an amount of other material (for example, water) can be more easily adjusted. Further, it is possible to prevent the apparatus from being excessively large.

The carbon dioxide-containing gas may be a gas including only carbon dioxide (carbon dioxide gas), but may be a gas containing carbon dioxide (carbon dioxide gas) and another gas (for example, nitrogen) from the viewpoint of easily availability.

A ratio of carbon dioxide (carbon dioxide gas) in the carbon dioxide-containing gas is preferably 5 vol% or more, more preferably 10 vol% or more, still more preferably 20 vol% or more, still more preferably 50 vol% or more, still more preferably 80 vol% or more, and particularly preferably 90 vol% or more. If the ratio is 5% by volume or more, an amount of the carbon dioxide fixed in the cement slurry can be further increased. Further, a period required for preparing the carbonated cement slurry can be shortened.

Examples of the carbon dioxide-containing gas include liquefied carbon dioxide, exhaust gas generated in a cement production process (carbon dioxide concentration: about 20 vol%), exhaust gas generated in an iron-making process (carbon dioxide concentration: about 20 vol%), exhaust gas generated in a thermal power generation process (carbon dioxide concentration: about 10 vol%), or separated and recovered gas from these exhaust gases (carbon dioxide concentration: about 100 vol%).

The carbon dioxide-containing gas is supplied from a carbon dioxide-containing gas supply apparatus into the carbonation apparatus through an inflow path of the carbon dioxide-containing gas from an inflow port of the carbon dioxide-containing gas of the carbonation apparatus at a pressure larger than atmospheric pressure.

The carbon dioxide-containing gas is supplied to a gas phase including a carbon dioxide-containing gas formed above a liquid phase including the cement slurry. The inflow port of the carbon dioxide-containing gas is usually arranged at a position not in contact with the cement slurry (a position vertically above a liquid level of the cement slurry, such as the upper portion of the carbonation tank (for example, a lid)) from the viewpoint of preventing blockage due to generation of scale.

A difference between a pressure of the gas phase to which the carbon dioxide-containing gas is supplied (a pressure of the gas phase in the carbonation tank) and the atmospheric pressure is preferably 0.02 to 0.2 MPa, more preferably 0.03 to 0.18 MPa, and particularly preferably 0.04 to 0.15 MPa. When the pressure is 0.02 MPa or more, it is possible to increase an amount of carbon dioxide fixed in the cement slurry per unit time, and the cement slurry can be carbonated more efficiently. Further, the carbonation apparatus can be made more compact. When the pressure is 0.2 MPa or less, it is possible to prevent the cost of the equipment from becoming excessive.

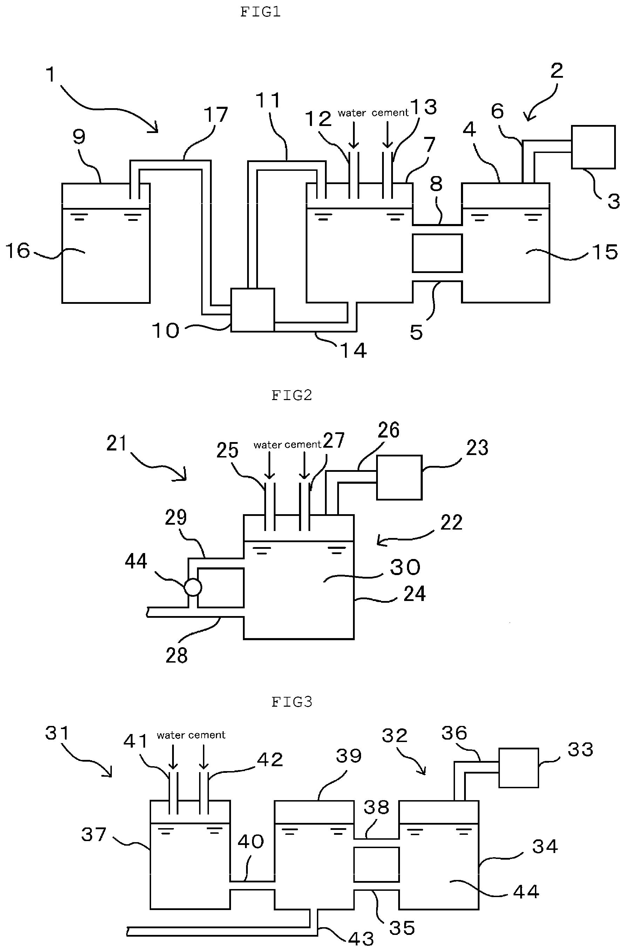

Hereinafter, with reference to FIG. 1 to FIG. 3, a specific description will be described. In the following description, the "upstream" means a side near a place where cement and water are mixed, and the "downstream side" means a side far from the place where cement and water are mixed.

FIG. 1 is a schematic view showing a carbonated cement slurry production system 1 including a carbonation apparatus 2 and a mixing tank 7.

The carbon dioxide-containing gas is supplied from a carbon dioxide-containing gas supply apparatus 3 to a gas phase including the carbon dioxide-containing gas positioned above a cement slurry 15 stored in a carbonation tank 4 through an inflow port 6 (an inflow path) of the carbon dioxide-containing gas.

A mixing tank 7 for mixing cement and water to obtain a cement slurry is arranged on the upstream side of the carbonation apparatus 2.

Cement as a material of the cement slurry is charged into the mixing tank 7 through an inflow port 13 (an inflow path) of the cement. Water as a material of the cement slurry is charged into the mixing tank 7 through an inflow port 12 (an inflow path) of the water.

The cement and water charged into the mixing tank 7 are stirred and mixed by using a mixing means (not shown) such as a stirring blade or a hand mixer arranged in the mixing tank 7 to prepare a cement slurry.

The cement slurry prepared in the mixing tank 7 is supplied to the carbonation tank 4 through an inflow port 8 (an inflow path) of the cement slurry. Further, in order to supply the cement slurry to the carbonation tank 4, a supply means such as a pump may be arranged in the inflow port 8 (the inflow path) of the cement slurry (not shown).

The carbonated cement slurry production system 1 may be provided with a slurry circulation path 5 for circulating the carbonated cement slurry between the carbonation tank 4 and the mixing tank 7.

The carbonated cement slurry is circulated by repeating that it is returned from the carbonation tank 4 to the mixing tank 7 through the slurry circulation path 5 and then returned from the mixing tank 7 to the carbonation tank 4 through the inflow port 8 (the inflow path) of the cement slurry.

To circulate the carbonated cement slurry, a circulation means, such as a pump, may be provided in the inflow port 8 (the inflow path) of the cement slurry and the slurry circulation path 5 (not shown). The cement slurry or carbonated cement slurry is normally circulated in one direction by the circulation means such as a pump.

The above circulation is usually performed until the cement slurry becomes a carbonated cement slurry in which a target amount of carbon dioxide (carbon dioxide gas) is absorbed and fixed (a carbonated cement slurry in which an adequate amount of carbon dioxide gas is absorbed and fixed).

By carbonating the cement slurry in the carbonation tank 4 while circulating the carbonated cement slurry between the carbonation tank 4 and the mixing tank 7, it becomes possible to increase a fixed amount of the carbon dioxide to the cement slurry per unit time, and the cement slurry can be more efficiently carbonated. Further, in the case where the carbonation of the cement slurry is continuously carried out, a time required for carbonation and the like can be easily adjusted. The carbonated cement slurry may be circulated without using the circulation means such as a pump. In this case, the inflow port (the inflow path) of the cement slurry may also serve as the slurry circulation path without separately arranging the inflow port (the inflow path) of the cement slurry and the slurry circulation path.

The carbonated cement slurry obtained in the carbonation tank 4 (carbonated cement slurry in which a target amount of carbon dioxide (carbon dioxide gas) is absorbed and fixed) is transferred from the mixing tank 7 to a solid/liquid separation means 10 through a discharge port 14 (a discharge path) of the carbonated cement slurry.

In FIG. 1, the discharge port 14 of the carbonated slurry is arranged in the mixing tank 7, but the discharge port (not shown) of the carbonated slurry may be arranged in the carbonation tank 4 and the carbonated cement slurry may be discharged from the discharge port.

The discharged carbonated cement slurry can be used as a material for a cement composition such as concrete.

The discharged carbonated cement slurry is temporarily stored in a storage tank 9 for storing the carbonated cement slurry 16 through a path 17 for discharging the carbonated cement slurry.

In order to prevent the carbonated cement slurry from precipitating, the storage tank 9 may have a stirring means (not shown) such as a stirring blade in the storage tank.

The carbonated cement slurry production system 1 is provided with the solid/liquid separation means 10 for recovering a part of water in the carbonated cement slurry obtained by the carbonation apparatus 2.

As the solid/liquid separation means 10, it is sufficient to separate a part of the water in the carbonated cement slurry, and a general solid/liquid separation apparatus such as a sedimentation tank, a vacuum dehydrator, a pressure dehydrator, or a centrifugal dehydrator may be used.

By separating a part of the water in the carbonated cement slurry using the solid/liquid separation means 10, a water-cement ratio (a mass ratio of water to cement (water/cement)) of the carbonated cement slurry can be adjusted. By adjusting the water-cement ratio, an amount of water contained in the carbonated cement slurry can be adjusted, and an amount of water contained in the cement composition can be more easily adjusted when the carbonated cement slurry is used as a material for a cement composition such as concrete.

The carbonated cement slurry production system 1 is provided with a water returning means 11 for using the water recovered by the solid/liquid separation means 10 as at least a part of the water for preparing the cement slurry. By using the recovered water as at least a part of the water for preparing the cement slurry, no drainage can be generated or an amount of drainage can be greatly reduced. The recovered water is normally supplied to the mixing tank 7.

The slurry circulation path, the storage tank, the solid/liquid separation means, and the water returning means can be omitted.

FIG. 2 is a schematic view showing the carbonated cement slurry production system 21 that includes the carbonation apparatus 22 and the carbon dioxide-containing gas supply apparatus 23 and does not include the mixing tank described above. The carbonation apparatus 22 includes a carbonation tank 24, an inflow port 27 of the cement, an inflow port 25 of the water, and an inflow port 26 of the carbon dioxide-containing gas.

Cement as a material of cement slurry is charged into the carbonation tank 24 through the inflow port 27 (the inflow path) of the cement. Water as is a material of the cement slurry is charged into the carbonation tank 24 through the inflow port 25 (the inflow path) of the water.

The cement and water charged into the carbonation tank 24 are stirred and mixed using a mixing means (not shown) such as a stirring blade or a hand mixer arranged in the carbonation tank 24 to prepare the cement slurry 30.

The carbon dioxide-containing gas supply apparatus 23 and the inflow port 26 of the carbon dioxide-containing gas are the same as the carbon dioxide-containing gas supply apparatus 3 and the inflow port 6 of the carbon dioxide-containing gas described above, respectively.

The carbonated cement slurry obtained in the carbonation tank 24 (the carbonated cement slurry in which a target amount of carbon dioxide (carbon dioxide gas) is absorbed and fixed) is discharged from a discharge port 28 (a discharge path) of the carbonated cement slurry.

The carbonated cement slurry production system 21 is provided with a slurry circulation path 29 for returning a part of the carbonated cement slurry discharged from the carbonation tank 24 (the carbonation tank included in the carbonation apparatus 22) to the carbonation tank 24 and circulating it.

To circulate the carbonated cement slurry, a circulation means such as a circulation pump 44 is arranged in the slurry circulation path 29.

The above circulation is usually performed until the cement slurry becomes a carbonated cement slurry in which a target amount of carbon dioxide (carbon dioxide gas) is absorbed and fixed (a carbonated cement slurry in which an adequate amount of carbon dioxide gas is absorbed and fixed).

By circulating the carbonated cement slurry by the circulation pump 44 and the slurry circulation path 29, it becomes possible to increase a fixed amount of carbon dioxide in the cement slurry per unit time, and the cement slurry can be more efficiently carbonated. Further, even when the carbonation of the cement slurry is continuously carried out, a time required for carbonation can be easily adjusted.

The slurry circulation path and the circulation pump may be omitted.

As with the carbonated cement slurry production system 1 described above, the carbonated cement slurry production system 21 may include the storage tank, the solid/liquid separation means, the water return means, and the like (not shown).

FIG. 3 is a schematic view showing the carbonated cement slurry production system 31 that includes the carbonation apparatus 32, the carbon dioxide-containing gas supply apparatus 33, the mixing tank 37, and the storage tank 39.

The mixing tank 37 for mixing cement and water to obtain a cement slurry is arranged on the upstream side of the carbonation apparatus 32.

Cement as a material of the cement slurry is charged into the mixing tank 37 through an inflow port 42 (an inflow path) of the cement. Water as a material of the cement slurry is charged into the mixing tank 37 through an inflow port 41 (an inflow path) of the water.

The cement and water charged into the mixing tank 37 are stirred and mixed by using a mixing means (not shown) such as a stirring blade or a hand mixer arranged in the mixing tank 37 to prepare a cement slurry.

The storage tank 39 for storing the cement slurry is arranged on the downstream side of the mixing tank 37 and on the upstream side of the carbonation apparatus 32.

The cement slurry (hereinafter, it is also referred to as the "first cement slurry") in the mixing tank 37 is supplied to the storage tank 39 through the inflow port 40 (the inflow path) of the first cement slurry and then stored. To supply the first cement slurry in the mixing tank 37 to the storage tank 39, a supply means, such as a pump, may be provided at the inflow port 40 of the first cement slurry (not shown).

The cement slurry (hereinafter, it is also referred to as the "second cement slurry") in the storage tank 39 is supplied as the cement slurry 44 stored in the carbonation tank 34 through an inflow port 38 (an inflow path) of the second cement slurry. To supply the second cement slurry in the storage tank 39 to the carbonation tank 34, a supply means, such as a pump, may be provided at the inflow port 38 (not shown) of the second cement slurry.

The carbonated cement slurry production system 31 is provided with a slurry circulation path 35 for circulating the carbonated cement slurry between the carbonation tank 34 and the storage tank 39.

To circulate the carbonated cement slurry, a circulation means, such as a pump, may be provided in the slurry circulation path 35 (not shown).

The carbon dioxide-containing gas supply apparatus 33 and the inflow port 36 of the carbon dioxide-containing gas are the same as the carbon dioxide-containing gas supply apparatus 3 and the inflow port 6 of the carbon dioxide-containing gas described above, respectively.

The carbonated cement slurry is circulated by repeating that it is returned from the carbonation tank 34 to the storage tank 39 through the slurry circulation path 35 and then returned from the storage tank 39 to the carbonation tank 34 through the inflow port 38 (the inflow path) of the second cement slurry.

To circulate the carbonated cement slurry, a circulation means, such as a pump, may be provided in the inflow port 38 (the inflow path) of the second cement slurry and the slurry circulation path 35 (not shown). The cement slurry or carbonated cement slurry is normally circulated in one direction by a circulation means such as a pump.

The above circulation is usually performed until the cement slurry becomes a carbonated cement slurry in which a target amount of carbon dioxide (carbon dioxide gas) is absorbed and fixed (a carbonated cement slurry in which an adequate amount of carbon dioxide gas is absorbed and fixed).

By carbonating the cement slurry in the carbonation tank 34 while circulating the carbonated cement slurry between the carbonation tank 34 and the storage tank 39, it becomes possible to increase a fixed amount of carbon dioxide to the cement slurry per unit time, and the cement slurry can be more efficiently carbonated. Further, even when the carbonation of the cement slurry is continuously carried out, a time required for carbonation can be easily adjusted.

The carbonated cement slurry may be circulated without using a circulation means such as a pump. In this case, the inflow port (the inflow path) of the cement slurry may also serve as the slurry circulation path without separately arranging the inflow port (the inflow path) of the cement slurry and the slurry circulation path.

The carbonated cement slurry carbonated in the carbonation tank 34 is discharged from the storage tank 39 through the discharge port 43 (the discharge path) of the carbonated cement slurry.

In FIG. 3, the discharge port 43 of the carbonated cement slurry is provided in the storage tank 39, but the discharge port (not shown) of the carbonated cement slurry may be provided in the carbonation tank 34 and the carbonated cement slurry may be discharged from the discharge port.

The discharged carbonated cement slurry can be used as a material for a cement composition such as concrete.
The slurry circulation path may be omitted.

As with the carbonated cement slurry production system 1 described above, the carbonated cement slurry production system 31 may include the storage tank, the solid/liquid separation means, the water return means, and the like (not shown) .

The carbonated cement slurry production system may be provided with a liquid temperature adjustment means (not shown) for adjusting a liquid temperature of at least one of the cement slurry and the carbonated cement slurry.

A degree of absorption and fixation of carbon dioxide into the cement slurry and a quality of the carbonated cement slurry are affected by a temperature of the cement slurry and the carbonated cement slurry. By adjusting a liquid temperature of at least one of the cement slurry and the carbonated cement slurry, carbon dioxide can be more efficiently absorbed and fixed in the cement slurry with a larger amount, and a quality of the carbonated cement slurry can be controlled (adjusted).

The liquid temperature adjustment means is not particularly limited as long as it has a cooling means and a heating means.

The liquid temperature adjustment means can be arranged in the mixing tank, the storage tank, the carbonation tank, the slurry circulation path or the like. The liquid temperature adjustment means adjusts a liquid temperature of the cement slurry or the carbonated cement slurry based on a liquid temperature measured by a temperature measurement means (not shown) for measuring a liquid temperature of the cement slurry or the carbonated cement slurry. The temperature measurement means can be arranged in the mixing tank, the storage tank, the carbonation tank, the slurry circulation path or the like.

A liquid temperature of the cement slurry or carbonated cement slurry adjusted by the liquid temperature adjusting means is preferably 10 to 50°C., more preferably 20 to 40°C. When the liquid temperature is 10°C or higher, the cost of the cooling equipment can be prevented from becoming excessive. When the liquid temperature is 50°C or less, carbon dioxide can be absorbed and fixed to the cement slurry more efficiently and with a larger amount.

The carbonated cement slurry production system may include a pH measurement means (not shown) for measuring a pH of at least one of the cement slurry and the carbonated cement slurry. Based on the measured pH of the cement slurry or carbonated cement slurry, it can be determined whether the carbonated cement slurry with a target amount of carbon dioxide (carbon dioxide gas) absorbed and fixed is obtained (whether an adequate amount of carbon dioxide gas is absorbed and fixed in the cement slurry).

For example, when a measured value of the pH of the carbonated cement slurry in the carbonation tank is within a predetermined numerical range, it may be determined that an adequate amount of carbon dioxide gas is absorbed and fixed in the cement slurry, and the carbonated cement slurry in the carbonation tank may be discharged as the carbonated cement slurry in which a target amount of carbon dioxide (carbon dioxide gas) is absorbed and fixed.

By supplying the carbon dioxide-containing gas and adjusting the circulation of the cement slurry based on the measured value of the pH of the cement slurry or the carbonated cement slurry, a preparation of the carbonated cement slurry can be controlled (adjusted).

The pH measurement means can be arranged in the member where the cement slurry or carbonated cement slurry is stored or transferred, such as the mixing tank, the storage tank, the carbonation tank, the slurry circulation path, or the like.

Each member constituting the carbonated cement slurry production system described above may be provided with various measurement means such as a thermometer for measuring a temperature of the gas phase portion in the carbonation tank, a carbonate ion concentration measurement device, an oxygen concentration measurement device, a carbon dioxide concentration measurement device, and a pressure gauge for the purpose of controlling the preparation of the carbonated cement slurry.

An example of a method for producing a carbonated cement slurry obtained by carbonating a cement slurry containing cement and water with a carbon dioxide-containing gas using the carbonated cement slurry production system described above includes a cement slurry preparation step in which cement and water are mixed to obtain a cement slurry, a cement slurry storage step in which the cement slurry and the carbon dioxide-containing gas are stored in a carbonation tank such that a gas phase including the carbon dioxide-containing gas is positioned above a liquid phase including the cement slurry, and a carbonated cement slurry preparation step in which the carbon dioxide-containing gas is supplied to the gas phase at a pressure greater than atmospheric pressure to bring the liquid phase into contact with the gas phase to carbonate the cement slurry and to obtain a carbonated cement slurry.

### Reference Signs List

1,21,31 carbonated cement slurry production system
2,22,32 carbonation apparatus
3,23,33 carbon dioxide-containing gas supply apparatus
4,24,34 carbonation tank
5,29,35 slurry circulation path
6,26,36 inflow port of the carbon dioxide-containing gas
7,37 mixing tank
8 inflow port of the cement slurry
9 storage tank
10 solid/liquid separation means
11 water returning means
12,25,41 inflow port of the water.
13,27,42 inflow port of the cement.
39 storage tank
14,28,43 discharge port of the carbonated cement slurry
15,30,44 cement slurry
16 carbonated cement slurry
17 path
38 inflow port of the second cement slurry
40 inflow port of the first cement slurry
44 circulation pump

## Claims

1. A carbonated cement slurry production system for producing a carbonated cement slurry formed by carbonation of a cement slurry containing cement and water by a carbon dioxide-containing gas, the carbonated cement slurry production system comprising:
a carbonation apparatus for bringing the cement slurry into contact with the carbon dioxide-containing gas; and
a carbon dioxide-containing gas supply apparatus for supplying the carbon dioxide-containing gas to the carbonation apparatus at a pressure larger than an atmospheric pressure, wherein
the carbonation apparatus includes a carbonation tank for storing the cement slurry and the carbon dioxide-containing gas so that a gas phase formed of the carbon dioxide-containing gas is positioned above a liquid phase of the cement slurry.

2. The carbonated cement slurry production system according to claim 1, wherein
the carbonation apparatus includes an inflow port of the cement slurry and an inflow port of the carbon dioxide-containing gas, and
the carbonated cement slurry production system includes a mixing tank for mixing the cement with the water to obtain the cement slurry on an upstream side of the carbonation apparatus.

3. The carbonated cement slurry production system according to claim 2 wherein
the carbonated cement slurry production system includes a slurry circulation path for circulating the carbonated cement slurry between the carbonation apparatus and the mixing tank.

4. The carbonated cement slurry production system according to claim 1, wherein
the carbonation apparatus includes an inflow port of the cement, an inflow port of the water, and an inflow port of the carbon dioxide-containing gas.

5. The carbonated cement slurry production system according to claim 4, wherein
the carbonated cement slurry production system includes a slurry circulation path for returning a part of the carbonated cement slurry discharged from the carbonation apparatus to the carbonation apparatus and circulating it.

6. The carbonated cement slurry production system according to claim 1, wherein
the carbonated cement slurry production system includes a mixing tank for mixing the cement with the water to obtain the cement slurry on an upstream side of the carbonation apparatus, a storage tank for storing the cement slurry on a downstream side of the mixing tank and on an upstream side of the carbonation apparatus, and a slurry circulation path for circulating the carbonated cement slurry between the carbonation apparatus and the storage tank.

7. The carbonated cement slurry production system of any one of claims 1 to 6, wherein
the carbonated cement slurry production system includes a storage tank for storing the carbonated cement slurry formed by the carbonation apparatus.

8. The carbonated cement slurry production system according to any one of claims 1 to 6, wherein
the carbonated cement slurry production system includes a solid/liquid separation means for recovering a part of the water in the carbonated cement slurry formed by the carbonation apparatus.

9. The carbonated cement slurry production system according to claim 8, wherein
the carbonated cement slurry production system includes a water return means for using the water recovered by the solid/liquid separation means as a part of the water for preparing the cement slurry.

10. The carbonated cement slurry production system according to any one of claims 1 to 6, wherein
the carbonated cement slurry production system includes a liquid temperature adjustment means for adjusting a liquid temperature of at least one of the cement slurry and the carbonated cement slurry.

11. The carbonated cement slurry production system according to any one of claims 1 to 6, wherein
the carbonated cement slurry production system includes a pH measurement means for measuring a pH of at least one of the cement slurry and the carbonated cement slurry.

12. A method for producing a carbonated cement slurry formed by carbonation of a cement slurry containing cement and water by a carbon dioxide-containing gas, the method comprising:
a cement slurry preparation step for mixing the cement with the water to form the cement slurry;
a cement slurry storage step for storing the cement slurry and the carbon dioxide-containing gas in a carbonation tank so that a gas phase formed of the carbon dioxide-containing gas is positioned above a liquid phase of the cement slurry; and
a carbonated cement slurry preparation step for supplying the carbon dioxide-containing gas to the gas phase at a pressure larger than an atmospheric pressure and bringing the liquid phase into contact with the gas phase to carbonate the cement slurry and to form a carbonated cement slurry.
